# EUROPÄISCHE PATENTANMELDUNG

(11) **EP 0 553 633 A1**
(43) Veröffentlichungstag der Anmeldung: **04.08.1993**
(21) Anmeldenummer: 93100352.9
(22) Anmeldetag: 13.01.1993
(51) Int. Cl.: F16F 7/14, F16F 15/00

(54) **Einrichtung zur schwingungsdämpfenden Lagerung einer Trägerplatte auf einem Gehäuseteil**

(30) Priorität: 31.01.1992 DE 9201144 U
(71) Anmelder: ROBERT BOSCH GMBH, 70442 Stuttgart (DE)
(72) Erfinder: Jankowiak, Uwe, Dipl.-Ing., W-7333 Ebersbach (DE); Brühl, Jürgen, Dipl.-Ing. (FH), NL-7051 WS Varsseveld (NL)

(57) **Zusammenfassung**

Es wird eine Einrichtung (10) zur schwingungsdämpfenden Lagerung einer Trägerplatte (11) auf einem Gehäusteil (12) vorgeschlagen, bei der die ein stoßempfindliches Gerät (13) tragende Trägerplatte (11) über ringförmige Drahtseil-Federelemente (14, 15) nachgiebig am Gehäuseteil (12) abgestützt ist. Die Federelemente (14, 15) bestehen aus mehreren Schlingen (26, 29) eines schraubenförmig angeordneten Drahtseils (25). Bei mobilen Kfz-Motortestern mit Datenspeicher (13) mit Laufwerk lassen sich Stöße auf den Datenspeicher wirksamreduzieren.

## Beschreibung

### Stand der Technik

Die Erfindung geht aus von einer Einrichtung zur schwingungsdämpfenden Lagerung einer Trägerplatte auf einem Gehäuseteil nach der im Oberbegriff des Anspruchs 1 näher angegebenen Gattung.

Es sind schon Einrichtungen zur schwingungsdämpfenden Lagerung einer Trägerplatte auf einem Gehäuseteil bekannt, wobei die Trägerplatte über nachgiebige Federelemente auf dem Gehäuseteil abgestützt ist und die Trägerplatte ein stoßempfindliches Gerät trägt. So ist es zum Beispiel bei Schallplattenspielern üblich, zum Schutz gegen Stöße und Schwingungen eine Trägerplatte mit seinem Laufwerk über Federelemente am Gehäuse abzustützten, wobei die Federelemente als normale, lotrecht angeordnete Spiralfedern ausgebildet sind, und diese Federelemente durch zusätzliche Schraubverbindungen ausschaltbar sind, so daß die Trägerplatte am Gehäuse feststellbar ist. Solche Federungen eignen sich weniger für mobile Einsatzfälle, wie dies zum Beispiel zum sicheren Betreiben von Datenspeichern mit Laufwerken im nicht stationären Einsatz im Fahrwagen erforderlich ist, wo im Betrieb relativ starke Stöße und Schwingungen auf die empfindlichen Geräte einwirken können.

### Vorteile der Erfindung

Die erfindungsgemäße Einrichtung zur schwingungsdämpfenden Lagerung einer Trägerplatte auf einem Gehäuseteil mit den kennzeichnenden Merkmalen des Anspruchs 1 hat demgegenüber den Vorteil, daß sie eine hochwirksame, schwingungsdämpfende Lagerung von Festplatten- oder Disketten-Laufwerken ermöglicht, so daß bei einem mobilen Einsatzfall wie bei einem Motortester, der in einer Werkstatt in einem mobilen Testerwagen verfahren wird, ein sicheres Betreiben eines Datenspeichers möglich ist. Die Einrichtung baut platzsparend und kostengünstig und ermöglicht bei relativ geringem Aufwand eine federnde und dämpfende Wirkung, so daß bei den im mobilen Betrieb auftretenden Stößen und Schwingungen, wie sie zum Beispiel beim Überfahren von Kopfsteinpflaster oder Torschwellen auftreten können, der Betrieb des Motortesters nicht beeinträchtigt wird. Mit dieser Einrichtung kann die Schwingungs- und Stoßbelastung um das 4- bis 10-fache verringert werden. Durch die Ausbildung der Drahtseil-Federelemente aus einem federnden, mehradrigen Stahlseil ergibt sich bei geringem Aufwand eine einfache und billige Bauart, wobei die einzelnen Arten bzw. Litzen des Stahlseils eine dämpfende Wirkung ergeben.

Durch die in den Unteransprüchen aufgeführten Maßnahmen sind vorteilhafte Weiterbildungen und Verbesserungen der im Anspruch 1 angegebenen Einrichtung möglich. Eine besonders günstige und optimale Wirkung der Einrichtung lässt sich bei Ausbildungen nach den Ansprüchen 6 und 7 erzielen, wenn die ringförmigen Drahtseil-Federelemente zwischen V-förmigen Teilen so angeordnet werden, daß die gedachten Ebenen durch die Befestigungselemente an den Schlingen schräg verlaufen und dadurch die Drahtseil-Federelemente eine zentrierende und stabilisierende Wirkung auf die Trägerplatte ausüben. Weitere vorteilhafte Ausgestaltungen ergeben sich aus den übrigen Ansprüchen sowie der Beschreibung und der Zeichnung.

### Zeichnung

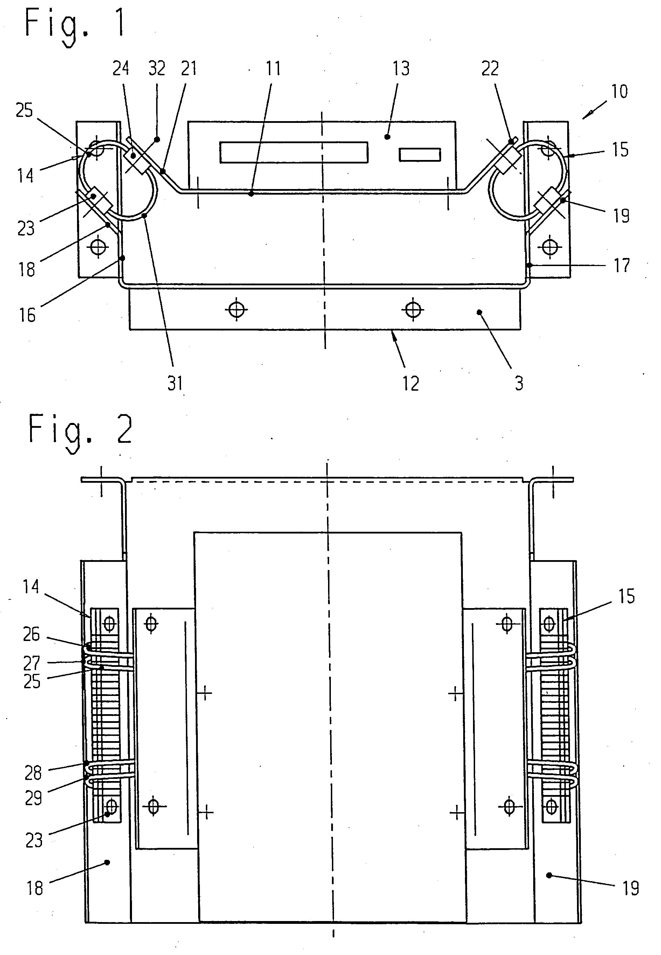

Ein Ausführungsbeispiel der Erfindung ist in der Zeichnung dargestellt und in der nachfolgenden Beschreibung näher erläutert. Es zeigen die Figur 1 eine Vorderansicht der Einrichtung zur schwingungsdämpfenden Lagerung einer Trägerplatte auf einem Gehäuseteil und die Figur 2 eine Draufsicht auf die Einrichtung nach Figur 1, jeweils in vereinfachter Darstellung.

### Beschreibung des Ausführungsbeispiels

Die Figur 1 zeigt in einer Vorderansicht eine Einrichtung 10 zur schwingungsdämpfenden Lagerung einer Trägerplatte 11 auf einem Gehäuseteil 12 in vereinfachter Darstellung. Auf der Trägerplatte 11 ist als stoßempfindliches Gerät ein Datenspeicher 13 festgeschraubt, der in seinem Inneren ein nicht näher gezeichnetes Festplattenlaufwerk aufweist. Die Trägerplatte 11 ist über Federelemente im Gehäuseteil 12 gelagert, wobei diese Federelemente als Drahtseil-Federelemente 14, 15 ausgebildet sind, die sowohl eine federnde, als auch eine dämpfende Wirkung aufweisen. Das Gehäuseteil 12 ist als Konsole ausgebildet, die in einem nicht näher gezeichneten, mobilen Kraftfahrzeug-Motortester eingebaut ist und auf welche die Stöße und Schwingungen einwirken, welche beim Bewegen des Motortesters in der Werkstatt auf das Fahrwagengehäuse einwirken.

Wie die Figur 1 in Verbindung mit Figur 2 näher zeigt, hat das als Konsole ausgebildete Gehäuseteil 12 zwei zueinander parallel verlaufende, vertikale Seitenwände 16, 17, deren obere Randzonen jeweils schräg nach außen gebogen sind, so daß zwei im wesentlichen V-förmig angeordnete Laschen 18, 19 ausgebildet sind.

Wie die Figur 1 besonders deutlich zeigt, ist die Trägerplatte 11 entlang ihrer Querseiten in den Bereichen außerhalb des stoßempfindlichen Geräts 13 nach oben abgewinkelt, so daß die Trägerplatte 11 außen schräg verlaufende Haltebleche 21, 22 aufweist, die ebenfalls im wesentlichen V-förmig angeordnet sind. Die Schräge der Laschen 18, 19 bzw. der Haltebleche 21, 22 ist so aufeinander abgestimmt, daß die einander gegenüberliegenden Teile 18, 21 bzw. 19, 22 zueinander parallel verlaufen. Zwischen der Lasche 18 und dem Halteblech 21 ist das erste Drahtseil-Federelement 14 angeordnet, während das zweite Drahtseil-Federelement 15 in entsprechender Weise zwischen der Lasche 19 und dem Halteblech 22 liegt. Die beiden Drahtseil-Federelemente 14, 15 sind untereinander gleich aufgebaut, so daß nur eines dieser Federelemente näher erläutert wird.

Das erste Drahtseil-Federelement 14 besteht im wesentlichen aus ersten Spannschienen 23, die an der Lasche 18 befestigt sind, zweiten Spannschienen 24, die an dem Halteblech 21 befestigt sind und einem zwischen den Spannschienen 23 und 24 verlaufenden, einstückigen Drahtseil 25. Das Drahtseil selbst ist ein hochwertiges, federndes, elastisches, aus mehreren Adern bzw. Litzen bestehendes Stahlseil, wie es in ähnlicher Form bei Bowdenzügen verwendet wird. Das Drahtseil 25 ist im wesentlichen ringförmig angeordnet, indem es ausgehend von einer Einspannstelle in der ersten Spannschiene 23 in zwei als Vollringen ausgebildeten Schlingen 26, 27 verläuft, anschließend entlang der ersten Spannschiene 23 axial zu dieser verläuft, um danach wiederum zwei als Vollringe ausgebildete Schlingen 28, 29 zu bilden. Alle Schlingen 26 bis 29 sind diametral in den beiden Spannschienen 23 und 24 befestigt, so daß die längste freie und damit federnde Länge des Drahtseils 25 in jeder Schlinge 26 bis 29 zwischen zwei Befestigungsstellen als im wesentlichen halbkreisförmiger Drahtseil-Abschnitt 31 ausgebildet ist. Die erste Schlingengruppe 26, 27 liegt somit in einigem Abstand von der zweiten Schlingengruppe 28, 29 im gleichen Drahtseil-Federelement 14, so daß eine sichere Abstützung der Trägerplatte 11 erreicht wird. Die schraubenförmig verlaufenden Schlingen 26 bis 29 eines Drahtseil-Federelements 14 verlaufen somit untereinander im wesentlichen parallel und die Schlingen 26 bis 29 stehen im wesentlichen senkrecht in Bezug auf die Lasche 18 und das Halteblech 21. Eine durch die erste und zweite Spannschiene 23 bzw. 24 verlaufende, gedachte Ebene 32 verläuft somit schräg zur Horizontalen und bildet mit der horizontalen Ebene vorzugsweise einen Winkel von ca. 45 Grad.

Das zweite Drahtseil-Federelement 15, das wie das erste Federelement 14 ausgebildet ist, ist in entsprechender Weise zwischen der Lasche 19 und dem Halteblech 22 angeordnet und dessen gleiche Teile sind mit gleichen Bezugszeichen versehen.

Die Wirkungsweise der Einrichtung 10 wird wie folgt erläutert: Die Einrichtung 10 wird im mobilen Betrieb verwendet und ist zu diesem Zweck auf einem Motortester in einem Fahrwagen eingebaut. Beim Bewegen bzw. Verschieben des TEster-Fahrwagens in der Werkstatt werden die auftretenden Stöße und Schwingungen auf das Gehäuseteil 12 übertragen, können jedoch nur über die federnd und dämpfend wirkenden Drahtseil-Federelemente 14, 15 auf die Trägerplatte 11 und den auf ihr festgeschraubten Datenspeicher 13 einwirken. Die Schwingungs- und Stoßbelastung wird dabei von den Federelementen 14, 15 in erheblichem Maße absorbiert, so daß diese Belastung um das 4- bis 10-fache verringert werden kann. Beim Überfahren von Kopfsteinpflaster oder Türschwellen werden die im Motortester auftretenden Schwingungen dadurch soweit gedämpft, daß ein einwandfreier Betrieb des empfindlichen Datenspeichers 13 gesichert ist. Dabei ist es besonders vorteilhaft, daß die dämpfende Wirkung sich vor allem durch die Reibung zwischen den einzelnen Adern bzw. Litzen des Drahtseiles 25 ergibt. Durch die schräg verlaufenden Ebenen 32 wird nicht nur eine kompakte und einfache Bauweise der Einrichtung 10 erreicht, sondern auch eine stabile Lagerung der Trägerplatte 11 mit optimaler Dämpfungswirkung in allen drei Bewegungsrichtungen.

Mit der erfindungsgemäßen Einrichtung 10 durchgeführte Versuche haben gezeigt, daß sich in der Praxis bei einer festen Eingangsbeschleunigung von z.B. 50m/s² und bei einer Masse des Datenspeichers mit Trägerplatte von ca. 700g bei einer Frequenz von 20 Hz die Schwingungsbelastung auf ca. ein Drittel und bei 50 Hz auf ca. ein Zehntel reduzieren läßt. Dabei ist zu berücksichtigen, daß die Festplatte im Datenspeicher bei 50m/s² ab 18 Hz und bei einer Beschleunigung von 30 m/s² ab 14 Hz betrieben werden kann.

Selbstverständlich sind an der gezeigten Einrichtung 10 Änderungen möglich, ohne vom Gedanken der Erfindung abzuweichen. Obwohl die gezeigte Ausführungsform mit paarweise im Abstand voneinander angeordneten Schlingen 26, 27 bzw. 28, 29 besonders vorteilhaft ist, ist es auch möglich, anstelle eines Schlingenpaares auch eine einzelne Schlinge oder auch drei und mehr Schlingen vorzusehen. Anstelle des einstückigen Drahtseils für beide Schlingenpaare kann auch für jedes Schlingenpaar ein einzelnes Drahtseilstück verwendet werden. Ebenso ist es möglich, für jede Schlinge ein einzelnes Drantseilstück zu verwenden. Ferner kann die Einrichtung 10 vorteilhaft auch dann verwendet werden, wenn sie mit dem Motortester unmittelbar in einem Kraftfahrzeug eingebaut wird.

## Patentansprüche

**1.** Einrichtung zur schwingungsdämpfenden Lagerung einer Trägerplatte auf einem Gehäuseteil, wobei die Trägerplatte über nachgiebige Federelemente auf dem Gehäuseteil abgestützt ist und auf ihr ein stoßempfindliches Gerät, insbesondere ein Festplatten- oder Disketten-Laufwerk angeordnet ist, dadurch gekennzeichnet, daß die Federelemente als im wesentlichen ringförmige Drahtseil-Federelemente (14, 15) ausgebildet sind, bei denen das im wesentlichen schraubenförmig verlaufende Drahtseil (25) eines Federelements (14, 15) mehrere Schlingen (26, 29) bildet, an denen die Trägerplatte (11) und das Gehäuseteil (12) so befestigt sind, daß die Schlingen (26 - 29) in den Befestigungsstellen im wesentlichen senkrecht zu der Trägerplatte (11) und dem Gehäuseteil (12) verlaufen.

**2.** Einrichtung nach Anspruch 1, dadurch gekennzeichnet, daß die Trägerplatte (11) über zwei Drahtseil-Federelemente (14, 15) abgestützt ist, die parallel zueinander jeweils entlang der Querseiten (21) der Trägerplatte (11) angeordnet sind.

**3.** Einrichtung nach Anspruch 2, dadurch gekennzeichnet, daß ein Drahtseil-Federelement (14, 15) zwei im Abstand voneinander liegende Schlingengruppen (26, 27; 28, 29) aufweist, von denen jede Gruppe aus mindestens zwei Schlingen (26, 27) besteht.

**4.** Einrichtung nach einem oder mehreren der Ansprüche 1 bis 3, dadurch gekennzeichnet, daß die Schlingen (26 - 29) eines Drahtseil-Federelements (14, 15) mittels Spannschienen (23, 24) an der Trägerplatte (11) und am Gehäuseteil (12) befestigt sind.

**5.** Einrichtung nach Anspruch 4, dadurch gekennzeichnet, daß die Spannschienen (23, 24) an den Schlingen (26 - 29) diametral zueinander befestigt sind.

**6.** Einrichtung nach einem oder mehreren der Ansprüche 1 bis 5, dadurch gekennzeichnet, daß die an einem Drahtseil-Federelement (14, 15) durch die Befestigungsstellen der Schlingen (26 - 29) und somit durch die Spannschienen (23, 24) verlaufende Ebene (32) schräg zur horizontal angeordneten Trägerplatte (11) verläuft, insbesondere mit ihr einen Winkel von ca 45 Grad bildet.

**7.** Einrichtung nach einem oder mehreren der Ansprüche 1 - 6, dadurch gekennzeichnet, daß das Gehäuseteil als Konsole (12) ausgebildet ist, von deren parallelen, vertikalen Seitenwänden (16, 17) jeweils eine Lasche (18, 19) schräg zur Seite, insbesondere nach außen gebogen ist, so daß beide Laschen (18, 19) eine V-Form bilden und daß die Trägerplatte (11) an ihren Querseiten entsprechend schräg zur Horizontalen abgebogene, insbesondere nach oben gebogene Haltebleche (21, 22) aufweist, die parallel zu den V-förmig angeordneten Laschen (18, 19) verlaufen und zwischen denen die Drahtseil-Federelemente (14, 15) angeordnet sind.

**8.** Einrichtung nach einem der Ansprüche 1 bis 7, dadurch gekennzeichnet, daß beide Schlingengruppen (26, 27, 28, 29) eines Drahtseil-Federelements (14, 15) aus einem einstückigen Drahtseil gebildet sind.

**10.** Einrichtung nach einem oder mehreren der Ansprüche 1 bis 9, gekennzeichnet durch seine Verwendung für einen Datenspeicher mit Laufwerk in einem mobilen Kraftfanrzeug-Motortester, insbesondere in einem mobilen Fahrwagen.
